# FASCICULE DE BREVET EUROPEEN

(11) **EP 0 774 879 B1**
(45) Date de publication et mention de la délivrance du brevet: **08.08.2001**
(21) Numéro de dépôt: 96460038.1
(22) Date de dépôt: 13.11.1996
(51) Int. Cl.: H04Q 11/04

(54) **Système de surveillance et de gestion d'un réseau d'accès point-multipoint**
System zur Überwachung und Steuerung eines Punkt-zu-Mehrpunkt-Zugangsnetzes
System for monitoring and controlling a point to multipoint access network

(30) Priorité: 15.11.1995 FR 9513753
(43) Date de publication de la demande: 21.05.1997
(73) Titulaire: FRANCE TELECOM, 75015 Paris (FR)
(72) Inventeur: Bochereau, Jean-Pierre, 22560 Pleumeur Bodou (FR)
(74) Mandataire: Maillet, Alain

(56) Documents cités:
- EP-A- 0 603 056
- ELECTRONICS AND COMMUNICATION ENGINEERING JOURNAL, vol. 4, no. 4, 1 Août 1992, pages 243-251, XP000309441 MIGOTTI T ET AL: "PERFORMANCE EVALUATION OF BROADBAND CONNECTIONS AND SERVICES UNDER VARYING TRAFFIC LOADS"
- DU CHAFFAUT ET AL: "ATM-PON: une famille de systèmes optiques pour la distribution", L'ECHO DES RECHERCHES, , -1993, Vol. , no. 154, pages 27 à 38

## Description

La présente invention concerne un système de surveillance et de gestion d'un réseau d'accès point-multipoint, notamment d'un réseau d'accès optique.

Un exemple de réseau d'accès optique auquel la présente invention peut s'appliquer est décrit dans l'article intitulé "ATM-PON : une famille de systèmes optiques pour la distribution. L'exemple SAMPAN" de G. du Chaffaut & all paru dans la revue L'écho des RECHERCHES N°154 du 4^{e} trimestre 1993.

Un réseau d'accès point-multipoint du type réseau d'accès optique est généralement constitué d'une pluralité de terminaisons de réseau optique, chacune située chez le client, reliées, par l'intermédiaire de lignes optiques constituées de fibres optiques et de coupleurs, à un terminal de ligne optique. Le terminal de ligne optique est relié à des équipements qui assurent le lien du réseau d'accès avec un ou plusieurs autres réseaux, par exemple un réseau de transport ATM. Le terminal de ligne assure quant à lui les fonctions de contrôle de la transmission sur le réseau d'accès, de sa configuration et de sa maintenance. Chaque terminaison de réseau est prévue pour permettre la connexion assurant des services proposés aux abonnés. Les applications peuvent être des applications pour des clients résidentiels ou des applications professionnelles. On notera que parmi les clients résidentiels, on distingue généralement, d'une part, les clients qui peuvent avoir accès entre autres aux services de vidéocommunication et, d'autre part, les clients qui n'ont accès qu'au service RNIS de base.

Il est connu de pourvoir un tel réseau d'accès d'un système de surveillance et de gestion afin d'en déterminer les performances et les anomalies.

Dans les réseaux d'accès optique qui sont du type point-multipoint, comme les réseaux qui font l'objet de la présente invention, la transmission entre un terminal de ligne vers les terminaisons de réseau se fait sur un canal dit descendant alors que celle entre une terminaison de réseau et le terminal de ligne associé se fait sur un autre canal dit remontant. Alors que la détermination des performances et des anomalies sur le canal remontant est effectuée par le terminal de ligne, celle sur le canal descendant est effectuée par chaque terminaison de réseau.

Pour la détermination sur le canal descendant, chaque terminaison de réseau comprend donc un circuit de détection des erreurs de transmission engendrées lors de la transmission entre le terminal de ligne et ladite terminaison de réseau, ledit circuit délivrant alors, pour chaque erreur détectée, un mot représentatif de ladite erreur détectée. Elle comprend encore un circuit de traitement prévu pour recevoir les mots engendrés par ledit circuit de détection et pour assurer le traitement des performances sur la base des mots reçus pendant une période déterminée. Ce circuit de traitement transmet au terminal de ligne associé, pour chaque erreur détectée, un message d'erreur caractérisant l'erreur détectée et, après un temps prédéterminé, engendre un message de compte-rendu des performances de la terminaison concernée. Le message d'erreur ainsi que le message de compte-rendu sont transmis audit terminal de ligne portés sur le canal remontant par des cellules OAM.

Le terminal de ligne est relié, via un équipement de gestion et un réseau de gestion des télécommunications, à une unité d'administration de réseau à laquelle il transmet donc les messages d'erreurs et les messages de performance du réseau d'accès auquel il appartient. L'analyse de ces performances et de ces erreurs menée par ladite unité d'administration de réseau permet d'effectuer une maintenance préventive et donc d'améliorer la disponibilité du réseau d'accès.

Ce système de surveillance et de gestion donne entière satisfaction mais on comprendra qu'il peut poser problème si l'un de ses circuits installés aux terminaisons de réseau est défaillant. Dans ce cas, en effet, l'opérateur peut effectuer une opération de maintenance qui n'est pas nécessaire au réseau. Pour éviter ce type de situation et pour pouvoir intervenir sur le système de surveillance et de gestion défaillant, on a cherché à mettre en oeuvre des moyens qui permettent de connaître l'état de fonctionnement du système de surveillance et de gestion de chaque terminaison d'un réseau d'accès optique.

Le but de l'invention est donc de proposer de tels moyens.

A cet effet, un système de surveillance et de gestion d'un réseau d'accès point-multipoint selon l'invention est caractérisé en ce qu'il comporte, dans chaque terminaison de réseau, des moyens de simulation pour engendrer des mots d'erreurs simulées et des moyens pour remplacer lesdits mots d'erreurs détectées par les moyens de détection par lesdits mots d'erreurs simulées engendrés par lesdits moyens de simulation.

Selon une autre caractéristique de l'invention, lesdits messages sont, d'une part, des messages de défauts caractérisant les erreurs détectées par lesdits moyens de détection et, d'autre part, des messages de compte-rendu des performances.

Selon une autre caractéristique de l'invention, lesdits moyens de simulation engendrent les mots d'erreurs simulés sur la base d'un message de demande de test reçu du terminal de ligne.

Selon une autre caractéristique de l'invention, lesdits moyens de traitement assurent un traitement des performances sur la base desdits mots simulés pendant une période déterminée dans le message de demande de test et engendrent ledit message de compte-rendu des performances qui est transmis audit terminal de ligne.

Selon une autre caractéristique de l'invention, lesdits moyens de traitement assurent un traitement des performances sur la base desdits mots simulés pendant une période prédéterminée et engendrent ledit message de compte-rendu des performances qui est transmis audit terminal de ligne.

Selon une autre caractéristique de l'invention, audit terminal de ligne est stockée au moins un profil de test caractérisé par des mots d'erreurs prédéterminés, des instants prédéterminés d'émission desdits mots d'erreurs et une durée prédéterminée de test, un profil étant transmis auxdits moyens de simulation pour engendrer les mots d'erreurs prédéterminés à des instants prédéterminés pendant une durée prédéterminée dans ledit profil.

Selon une autre caractéristique de l'invention variante de la précedente, audit terminal de ligne est stockée au moins un profil de test caractérisé par des mots d'erreurs prédéterminés, des instants prédéterminés d'émission desdits mots d'erreurs et une durée prédéterminée de test, ledit ou chaque profil étant également stocké à chaque terminaison de réseau, un identifiant d'un profil étant transmis du terminal de ligne auxdits moyens de simulation d'une terminaison de réseau pour engendrer les mots d'erreurs prédéterminés à des instants prédéterminés pendant une durée prédéterminée dans ledit profil.

Selon une autre caractéristique de l'invention, il comporte des moyens pour comparer les messages de défauts et les messages de performance émis par une terminaison de réseau avec des messages de référence correspondant audit profil du test effectué et des moyens pour déduire du résultat de cette comparaison le bon ou le mauvais fonctionnement dudit système.

Lorsque ledit réseau d'accès comporte des voies descendante et remontante de gestion et de maintenance, ledit message de demande de test est avantageusement transmis à une terminaison de réseau par la voie de gestion et de maintenance descendante, lesdits messages de défauts et de performances étant transmis par la voie de gestion et de maintenance remontante.

Selon une autre caractéristique de l'invention, lesdits moyens de simulation engendrent des mots d'erreurs simulées après la réception d'un code de synchronisation émis par le terminal de ligne.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un schéma synoptique d'un réseau d'accès point-multipoint utilisant un système de surveillance et de gestion selon l'invention, et
la Fig. 2 est un schéma synoptique d'un système de surveillance et de gestion selon l'invention.

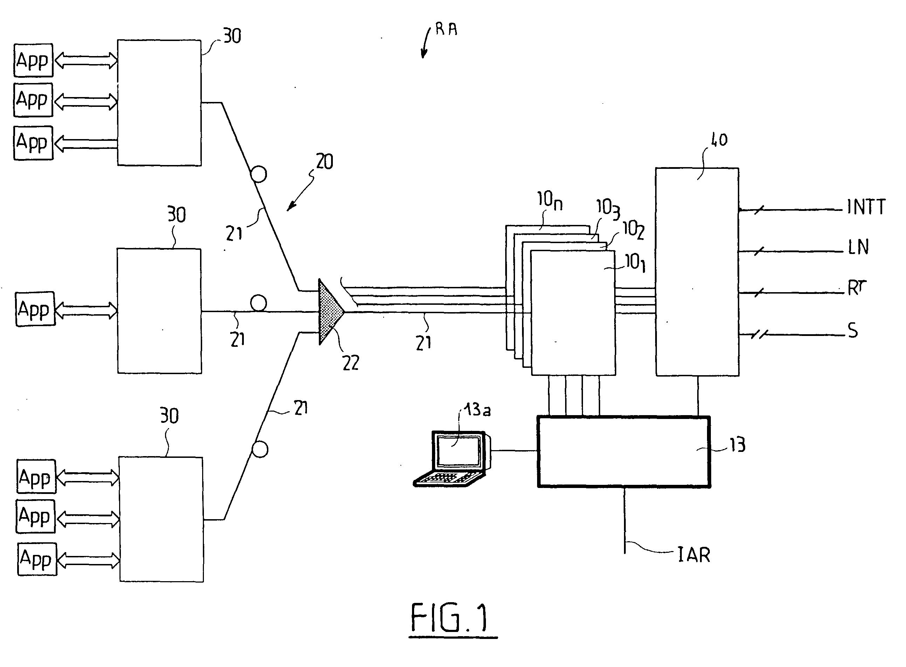

Sur la Fig. 1, on peut voir un réseau d'accès constitué d'un terminal de ligne 10₁ qui est relié, via un réseau 20 lui-même constitué de fibres optiques 21 et d'au moins un coupleur 22, à une pluralité de terminaisons de réseau 30.

Sur cette Fig. 1, on peut voir aussi d'autres terminaux de ligne 10₂ à 10ₙ appartenant à d'autres réseaux d'accès (non représentés) constitués eux-aussi d'un réseau optique et de terminaisons de réseau.

Chaque réseau de fibres optiques 20 est un réseau optique du type point-multipoint, par exemple sur fibre monomode. Les transmissions entre le terminal de ligne 10₁ vers les terminaisons de réseau 30 se font sur un canal dit descendant alors que celles entre une terminaison de réseau 30 et le terminal de ligne 10₁ associé se font sur un canal dit remontant.

La transmission des informations sur le canal descendant est assurée par des cellules, par exemple de type ATM (Asynchronous Transfer Mode), qui sont regroupées dans des trames. Dans une telle trame, est présente une cellule OAM (Opération And Maintenance) qui comprend, entre autres, un champ qui forme le support des messages de gestion et de surveillance et que l'on appellera dans la suite de la description, la voie OAM descendante et un autre champ portant des informations de gestion de trame et d'accès partagé et que l'on appellera dans la suite de la description, le champ MAC (Médium Access Control). Ce champ MAC est formé notamment d'un sous-champ référençant la terminaison de réseau auquel on destine une commande dont le code est décrit dans un autre sous-champ. Une telle commande est, comme on le verra par la suite, une commande d'initialisation ou une commande de configuration.

La transmission des données sur le canal remontant est assurée par des blocs disjoints émis par les différentes terminaisons de réseau 30 et ce par accès multiple à répartition temporelle AMRT. Certains blocs sont constitués de cellules OAM qui porte des informations de gestion et de maintenance formant ainsi une voie OAM remontante.

Seules trois terminaisons de réseau 30 sont représentées pour la clarté de la Fig. 1. Ces terminaisons de réseau 30 sont généralement situées chez le client ou chez un groupe de clients et sont principalement destinées à être reliées à des applications App par exemple par l'intermédiaire de liaisons appropriées. De telles applications sont prévues pour recevoir des services téléphoniques, des services RNIS, des services de télévision numérique, des services de vidéotéléphonie, etc. Elles sont par exemple destinées à des usagers résidentiels et/ou petits professionnels.

Les terminaux de ligne optique 10₁ à 10ₙ sont respectivement reliés, aux entrées correspondantes d'un brasseur de service 40 lui-même relié, en amont à un réseau de transport RT et à d'autres réseaux ou applications par l'intermédiaire d'interfaces de télécommunication INTT ou de lignes numériques LN, etc. Il peut être également relié à des serveurs S, par exemple des serveurs vidéo ou de sons.

Les terminaux de ligne optique 10₁ à 10ₙ ainsi que le brasseur 40 sont reliés à un équipement de gestion 13 qui assure l'interface avec une unité d'administration de réseau (non représentée). L'équipement de gestion 13 est relié, pour ce faire, via une interface IAR, à un réseau de gestion des télécommunications. L'unité d'administration est prévue pour assurer la gestion, à un niveau supérieur, du réseau de transport RT auquel est relié le réseau d'accès RA.

L'équipement de gestion 13 est aussi prévu pour assurer la gestion locale du réseau d'accès RA. Pour ce faire, il peut être relié à un terminal 13a. La gestion locale du réseau d'accès RA concerne, d'une part, la configuration dudit réseau RA et, d'autre part, la surveillance de sa qualité.

La configuration du réseau RA consiste essentiellement dans l'attribution de numéros d'identification aux terminaisons de réseau 30, dans la compensation des retards dus à la propagation des signaux optiques entre les terminaisons de réseau 30 et les terminaux de ligne 10, dans la validation ou l'inhibition de l'émission par les terminaisons de réseau 30 de signaux sur le canal remontant et, enfin, dans le contrôle et la commande des puissances optiques émises par les terminaisons de réseau 30. Elle consiste également dans l'allocation dynamique des débits large bande pour les clients résidentiels dits du type VT et des clients professionnels qui peuvent avoir accès entre autres aux services de vidéocommunication.

La surveillance de la qualité du réseau RA consiste essentiellement en la surveillance et la signalisation des défauts tels que les erreurs de ligne LE (Line Error), les défauts E-BER provoqués lorsque le taux d'erreurs binaires BER (Bit Error Rate) dépasse un seuil donné, les pertes de synchronisation de trame LOF (Loss Of Frame), les pertes du signal de réception LOS (Loss of Signal) et les défauts de récupération du signal d'horloge de réception CRF (Clock Recovery Failure). Elle consiste encore dans le traitement des performances, c'est-à-dire dans le calcul du nombre d'erreurs de ligne, du nombre de secondes gravement erronées SES (Severely Erroned Second), c'est-à-dire le nombre de secondes qui comporte plus d'un taux prédéterminé de blocs erronés ou de défauts, du nombre de secondes erronées ES (Erroned Second), c'est-à-dire le nombre de secondes qui comporte au moins un bloc erroné ou un défaut, des temps d'indisponibilité US d'un équipement (Unavailable State), un équipement étant indisponible lorsque le nombre de secondes gravement erronées (SES) consécutives dépassent un certain seuil, et du nombre d'événements courts d'interruption SIE (Short Interruption Event) correspondant à des périodes de temps indisponibles n'excédant pas un nombre prédéterminé de secondes.

Elle consiste encore dans la transmission, à l'équipement de gestion 13, de messages de défauts ou d'erreurs caractérisant le défaut ou l'erreur détecté et de messages de performances consistant en un compte-rendu des performances sur une période prédéterminée. C'est l'équipement de gestion 13 qui assure également l'interfaçage avec l'administration de réseau qui effectuera l'analyse des performances.

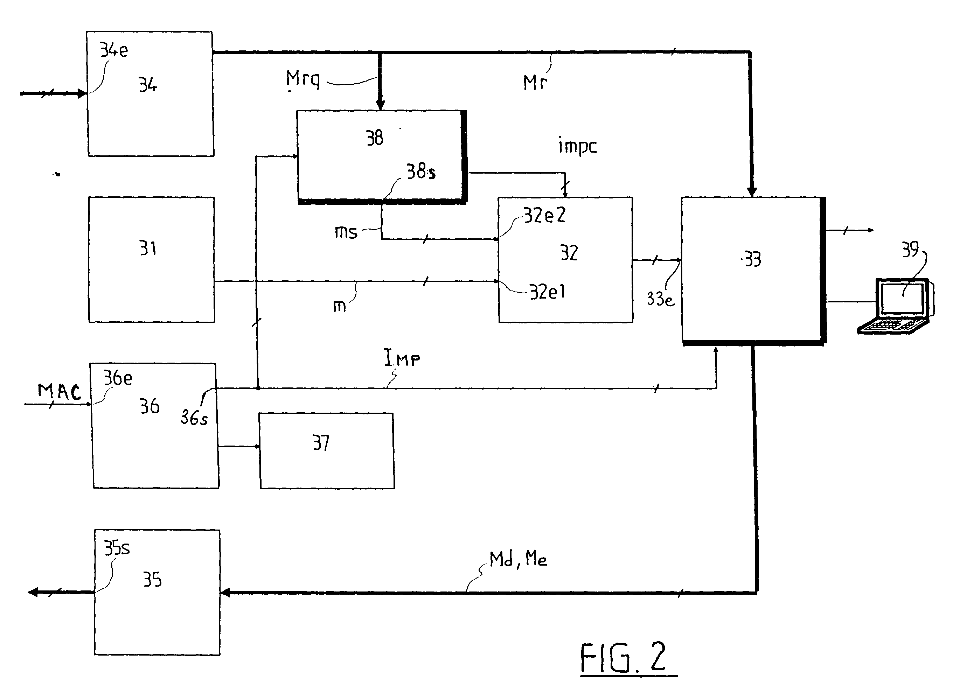

Dans le réseau RA, les fonctions de gestion locale décrites ci-dessus sont mises en oeuvre dans chacune des terminaisons 30, dans un système de surveillance et de gestion de terminaison. On a représenté à la Fig. 2 un exemple de réalisation d'un système de surveillance et de gestion d'une terminaison de réseau qui permet la mise en oeuvre de ces fonctions de gestion locale.

Ce système comprend un circuit 31 de détection et de capture des événements erreurs qui peuvent apparaître lors de la transmission des informations du terminal de ligne 10₁ vers la terminaison 30 concernée. Ces événements sont par exemple des erreurs de ligne LE, des pertes de synchronisation de trame LOF, des pertes du signal de réception LOS et des défauts de récupération du signal d'horloge CRF. Lorsqu'il a détecté un tel événement, le circuit 31 délivre un mot m qui est transmis, via un sélecteur 32 dont la fonction sera explicitée ci-dessous, à une entrée 33e d'un circuit 33 de traitement des défauts et performances.

Le système de surveillance comprend encore un circuit 34 qui est prévu pour recevoir, sur son entrée 34e, la voie OAM (Operation And Maintenance) descendante qui a été émise par le terminal de ligne 10₁ à destination des terminaisons de réseau 30 dans des cellules OAM descendantes et un circuit 35 qui est prévu pour émettre, sur sa sortie 35s, la voie OAM remontante à destination du terminal de ligne 10₁ dans des cellules OAM remontantes.

Il comporte encore un circuit 36 dont l'entrée 36e est prévue pour recevoir le champ MAC émis par le terminal de ligne 10₁ dans des cellules OAM descendantes. Lorsque le champ MAC contient une commande de configuration, le circuit 36 délivre des informations de configuration à un circuit 37 assurant la configuration de la terminaison de réseau 30 considérée. Lorsque le champ MAC correspond à une demande de performance, le circuit 36 délivre sur sa sortie 36s un signal de synchronisation de performance IMP.

Le circuit 34 de réception de la voie OAM descendante est relié au circuit de traitement 33 pour lui délivrer des messages de surveillance et de gestion Mr contenus dans les cellules OAM descendantes reçues, par le circuit 34, du terminal de ligne 10₁. Le circuit de traitement 33 est relié au circuit 35 pour lui délivrer, d'une part, les messages de défauts Md au moment où ceux-ci ont été détectés par le circuit de détection 31 et, d'autre part, les messages Me de compte-rendu de performances. Ces deux types particuliers de messages Md et Me sont transmis, via la voie de remontante OAM, vers le terminal de ligne 10.

Pour ce faire, le circuit de traitement 33 est prévu pour transmettre au circuit 35 les messages Md lorsqu'un mot m apparaît sur son entrée 33e, chaque message Md caractérisant le ou les défauts représentés par le mot m. Pour ce faire, le circuit 33 opère par exemple un traitement qui consiste à ne considérer la disparition effective d'un défaut qu'un temps prédéterminé après sa disparition. Le circuit 33 est également prévu pour calculer, sous la commande du signal de synchronisation de performance IMP délivré par le circuit 36 et à partir des mots m que lui transmet le circuit 31 dans une période de temps donnée définie dans le message Mr ou prédéfinie, le nombre de chaque type d'événements, comme les secondes gravement erronées SES, les secondes erronées ES, les temps d'indisponibilité US et les événements courts d'interruption SIE. Il forme le message de compte-rendu Me qui est transmis, sous la commande d'un message Mr délivré par le circuit de réception 34, au circuit d'émission 35 en vue de sa transmission au terminal de ligne. Ce message Me contient les performances de la liaison entre le central 10 et la terminaison 30 concernée.

Le système de surveillance de l'invention comprend encore un circuit de simulation d'événements 38 qui est prévu pour recevoir du circuit de réception 34 un message Mrq de demande de test qu'il a lui-même reçu, via la voie OAM descendante, du terminal de ligne 10₁. Le circuit 38 est prévu pour délivrer, sur sa sortie 38s, des mots ms qui sont représentatifs d'événements d'erreurs. Ces mots ms sont transmis sur une seconde entrée 32e2 du sélecteur 32. On rappelle que le mot d'erreurs m en sortie du détecteur d'erreurs 31 est présenté sur la première entrée 32el du sélecteur 32.

Les mots d'erreurs ms générés par le circuit de simulation 38 sont identiques de structure aux mots d'erreurs m qui sont générés par le circuit de détection 31.

Une demande de test formulée par le terminal de ligne 10₁ est transmise à la terminaison 30 concernée par un message Mrq approprié sur la voie OAM descendante reçu par le circuit de réception 34. Ce message de demande de test Mrq est fourni au circuit de simulation 38 qui se met en attente d'un message de demande de performances sous la forme du signal IMP délivré par le circuit 36 pour commencer la simulation de mots d'erreurs.

Dès réception par le circuit 36 dudit code de synchronisation transmis par le terminal 10₁ et contenu dans le champ MAC de la voie OAM descendante, le circuit 36 délivre le signal IMP sur sa sortie 36s. Cette impulsion IMP est transmise au circuit de simulation 38 qui, d'une part, commence à délivrer sur sa sortie 38s des messages simulés d'erreurs ms et qui, d'autre part, commande le sélecteur 32 de manière que les mots ms engendrés par le circuit 38 soient transmis au circuit de traitement 33. Elle est également transmise, comme on l'a vu précédemment, au circuit de traitement 33 qui commence alors l'analyse et le calcul du nombre des différentes erreurs engendrées par le circuit de simulation 38, ceci en vue de la formation des messages de défaut Md et de compte-rendu de performances Me. La commande du sélecteur 32 se fait par la transmission d'une impulsion de commande impc sur une entrée appropriée du sélecteur 32 de manière que sa sortie délivre les mots qui sont présents sur son entrée 32e2 et non plus ceux qui sont présents sur l'entrée 32e1.

Le circuit de simulation 38 génère les mots d'erreurs ms selon plusieurs modes de fonctionnement. Il peut le faire par exemple sur la base des informations qui sont contenues dans le message de demande de test Mrq.

Ces informations peuvent se présenter sous la forme de profils de test caractérisés par des mots d'erreurs prédéterminés, correspondant à des erreurs de ligne LE, des défauts E-BER, des pertes de synchronisation trame LOF, des pertes de signal de réception LOS et des défauts de récupération d'horloge CRF ainsi que les instants prédéterminés d'émission desdits mots d'erreurs. Ces profils sont stockés au terminal de ligne 10₁ et sont émis en direction d'une terminaison de réseau 30 dans un message Mrq. Le message Mrq permet au circuit de simulation 38 d'émettre les mots d'erreurs simulées qui correspondent au profil qu'il contient.

Une variante de réalisation de l'invention prévoit que des profils tels qu'il vient d'être décrits sont stockés, d'une part, au terminal de ligne 10₁ et, d'autre part, à chacune des terminaisons de réseau 30. Le terminal de ligne 10₁ émet alors en direction d'une terminaison d'abonné 30 un ou plusieurs identifiants de profil dans le message Mrq. L'identifiant ou les identifiants reçus dans un message Mrq permettent au circuit de simulation 38 d'émettre les mots d'erreurs simulées qui correspondent au ou aux profils répertoriés par cet ou ces identifiants.

Dans chacun des profils, est également définie la durée du test.

Pendant le test, les messages de défauts Md sont transmis au circuit d'émission 35 et, par la voie OAM remontante au terminal de ligne 10₁. de même, pendant le test, à une fréquence définie ou prédéfinie, le circuit de traitement 33 génère les messages de compte-rendu de performances Me qui sont transmis, via le circuit d'émission 35 et la voie de retour OAM, au terminal de ligne 10₁.

Le terminal de ligne 10₁ transmet les messages Md et Me à l'équipement de gestion 13 qui les analyse pour en déduire alors le bon fonctionnement ou le mauvais fonctionnement du système de surveillance et de gestion du réseau d'accès.

On notera qu'afin que le terminal de ligne 10₁ puisse reconnaître les messages de défaut Md et de performance Me engendrés par le circuit 33 lorsque le système de surveillance est dans les périodes de simulation, un en-tête spécifique est attribué aux cellules portant ces messages.

Pendant toute la période de test, les services assurés par les terminaisons ainsi que leurs configurations ne sont affectés d'aucune façon, seule la surveillance de la qualité de la terminaison est perturbée puisqu'elle n'est plus opérationnelle, le circuit de traitement 33 n'analysant plus les mots m qui sont engendrés par le circuit de détection 31.

Lorsque le test est terminé, le circuit de simulation 38 commande le sélecteur 32 de manière que ce soit maintenant les mots m issus du circuit 31 qui soient transmis au circuit de traitement 33.

On notera qu'il est possible de prévoir l'arrêt de l'opération de test à tout moment, soit par une commande d'initialisation des équipements émanant du terminal de ligne 10₁ sous la forme d'un code d'initialisation dans le champ MAC de la voie descendante, soit sous la forme d'un message spécialisé sur la voie OAM descendante.

Pendant toute la durée de l'opération de test, les messages de défauts Md et de performances Me peuvent être affichés sur tout moyen approprié tant au niveau du terminal de ligne 10₁ qu'au niveau de la terminaison de réseau 30 (par exemple par un écran 39) afin de procéder à une comparaison en cas de doute.

Chaque opération de test est parfaitement reproductible, du fait que son déclenchement est piloté par un code approprié dans le champ MAC et reçu par le circuit 36. On peut alors envisager de mettre en mémoire, au niveau du terminal de ligne 10₁, des profils de test caractérisés par des mots d'erreurs prédéterminés, des instants prédéterminés de génération des mots d'erreurs, et une durée prédéterminée de test. Le message Mrq qui est transmis à la terminaison de réseau 30 contient un profil qui initialise le circuit de simulation 38 pour que celui-ci émette des mots simulés d'erreurs ms correspondant aux mots prédéterminés aux instants prédéterminés et pendant la durée prédéterminée. En fin de test, après avoir reçu les messages Md et Me correspondant, le terminal de ligne 10₁ procède à une comparaison automatique des messages Md et Me reçus avec des messages de référence Md' et Me' correspondant au profil qui était contenu dans le message Mrq et signale le résultat de cette comparaison ("Test bon" ou "Test mauvais"). En cas de test négatif, une analyse subséquente des résultats obtenus, pourra alors aider à la reconnaissance des parties d'équipement défaillantes.

On notera que la mise en mémoire des profils de test peut être faite au niveau du terminal de ligne 10₁ ainsi qu'au niveau des terminaisons de réseau 30, si bien qu'il n'est plus nécessaire que le message Mrq les contiennent.

Le dispositif de test de l'invention représente un outil intéressant pour l'opérateur afin de connaître l'état de fonctionnement des équipements de chaque terminaison de réseau et afin de pouvoir procéder à leur remplacement éventuel partiel par télécommande.

Dans un mode de réalisation préféré, le circuit de traitement 33 est un circuit comportant un microcontrôleur effectuant les calculs nécessaires par un programme contenu dans sa mémoire. Il en est de même du circuit de simulation 38. Avantageusement, on utilisera deux microcontrôleurs différents, notamment pour des raisons de fiabilité, mais il n'est pas exclu de réaliser les deux fonctions ainsi que celle qui est effectuée par le commutateur 32, par un unique microcontrôleur.

De manière générale, on comprendra que l'invention concerne également des modes de réalisation où les circuits du système et, notamment, les circuits de simulation 38 et de traitement 33 sont constitués de tous moyens qui permettent de réaliser les fonctions mentionnées ci-dessus. On parle donc notamment de moyens de simulation 38 et de moyens de traitement 33.

## Revendications

1. Système de surveillance et de gestion d'un réseau d'accès point-multipoint prévu pour relier, d'une part, un terminal de ligne (10₁) et, d'autre part, une pluralité de terminaisons de réseau (30), chaque terminaison de réseau (30) comprenant des moyens (31) pour détecter des erreurs de transmission engendrées lors de la transmission entre ledit terminal de ligne (10₁) et ladite terminaison de réseau (30) et pour engendrer, pour chaque erreur détectée, un mot (m) représentatif de ladite erreur détectée, des moyens de traitement (33) prévus pour traiter les mots engendrés par lesdits moyens de détection (31) et pour former des messages (Md, Me) liés auxdits mots d'erreurs et des moyens (35) pour transmettre lesdits messages (Md, Me) audit terminal de ligne (10₁), caractérisé en ce qu'il comporte, dans chaque terminaison de réseau (30), des moyens de simulation (33; 38) pour engendrer des mots d'erreurs simulés (ms) et des moyens (33; 32) pour remplacer lesdits mots (m) d'erreurs détectées par les moyens de détection (31) par lesdits mots (ms) d'erreurs simulées engendrés par lesdits moyens de simulation.

2. Système de surveillance et de gestion selon la revendication 1, caractérisé en ce que lesdits messages sont, d'une part, des messages de défauts (Md) caractérisant les erreurs détectées ou simulées par lesdits moyens de détection ou de simulation et, d'autre part, des messages de compte-rendu des performances (Me).

3. Système de surveillance et de gestion selon la revendication 1 ou 2, caractérisé en ce que lesdits moyens de simulation (33; 38) engendrent les mots d'erreurs simulées (ms) sur la base d'un message de demande de test (Mrq) reçu du terminal de ligne (10₁).

4. Système de surveillance et de gestion selon une des revendications précédentes, caractérisé en ce que lesdits moyens de traitement (33) assurent un traitement des performances sur la base desdits mots simulés (ms) pendant une période déterminée dans le message de demande de test (Mrq) et engendrent ledit message de compte-rendu des performances (Me) qui est transmis audit terminal de ligne (10₁).

5. Système de surveillance et de gestion selon une des revendications 1 à 4, caractérisé en ce que lesdits moyens de traitement (33) assurent un traitement des performances sur la base desdits mots simulés (ms) pendant une période prédéterminée et engendrent ledit message de compte-rendu des performances (Me) qui est transmis audit terminal de ligne (10₁).

6. Système de surveillance et de gestion selon une des revendications 3 à 5, caractérisé en ce qu'audit terminal de ligne (10₁) est stocké au moins un profil de test caractérisé par des mots d'erreurs prédéterminés, des instants prédéterminés d'émission desdits mots d'erreurs et une durée prédéterminée de test, un profil étant transmis auxdits moyens de simulation (33, 38) pour engendrer les mots d'erreurs prédéterminés à des instants prédéterminés pendant une durée prédéterminée dans ledit profil.

7. Système de surveillance et de gestion selon une des revendications 3 à 5, caractérisé en ce qu'audit terminal de ligne (10₁) est stocké au moins un profil de test caractérisé par des mots d'erreurs prédéterminés, des instants prédéterminés d'émission desdits mots d'erreurs et une durée prédéterminée de test, ledit ou chaque profil étant également stocké à chaque terminaison de réseau, un identifiant d'un profil étant transmis du terminal de ligne auxdits moyens de simulation (33, 38) d'une terminaison de réseau pour engendrer les mots d'erreurs prédéterminés à des instants prédéterminés pendant une durée prédéterminée dans ledit profil.

8. Système de surveillance et de gestion selon la revendication 6 ou 7, caractérisé en ce qu'il comporte des moyens pour comparer les messages de défauts (Md) et les messages de performance (Me) émis par une terminaison de réseau (30) avec des messages de référence (Md' et Me') correspondant audit profil du test effectué et des moyens pour déduire du résultat de cette comparaison le bon ou le mauvais fonctionnement dudit système.

9. Système de surveillance et de gestion selon une des revendications précédentes, caractérisé en ce que ledit message de demande de test (Mrq) est transmis à une terminaison de réseau (30) sur une voie de gestion et de maintenance descendante alors que lesdits messages de défauts (Md) et de performances (Me) sont transmis par une voie de gestion et de maintenance remontante.

10. Système de surveillance et de gestion selon une des revendications précédentes, caractérisé en ce que les moyens de simulation (33; 38) engendrent des mots d'erreurs simulées (ms) après la réception d'un code de synchronisation émis par le terminal de ligne (10₁).

## Claims

1. Monitoring and point-to-multiple point access network management system intended to connect, firstly, a line terminal (10₁) and, secondly, a number of network terminals (30), each network terminal (30), containing facilities (31) for detecting transmission errors generated on transmission between said line terminal (10₁) and said network terminal (30) and for generating a word (m) for each error detected representing said error detected, processing facilities (33) intended to process the words generated by said detection facilities (31) and to form messages (Md, Me) associated with said error words and facilities (35) to transmit said messages (Md, Me) to said line terminal (10₁), characterised by the fact that each network terminal (30) contains simulation facilities (33; 38) for generating simulated error words (ms) and facilities (33; 32) for replacing said error words (m) detected by the detection facilities (31) with simulated error words (ms) generated by said simulation facilities.

2. Monitoring and management system in accordance with claim 1, characterised by the fact that said messages are, firstly, error messages (Md) characterising errors detected or simulated by said monitoring or simulation facilities and, secondly, messages confirming performance (Me).

3. Monitoring and management system in accordance with claim 1 or 2, characterised by the fact that said simulation facilities (33; 38) generate the simulated error words (ms) on the basis of a test request message (Mrq) received from the line terminal (10₁).

4. Monitoring and management system in accordance with one of the preceding claims, characterised by the fact that said processing facilities (33) process performance on the basis of said simulated words (ms) throughout a period specified in the test request message (Mrq) and generate said performance confirmation message (Me) which is transmitted to said line terminal (10₁).

5. Monitoring and management system in accordance with one of claims 1 to 4, characterised by the fact that said processing resources (33) process performance on the basis of said simulated words (ms) throughout a predetermined period and generate said performance confirmation message (Me) which is transmitted to said line terminal (10₁).

6. Monitoring and management system in accordance with one of claims 3 to 5, characterised by the fact that at least one test profile characterised by predetermined error words, predetermined transmission times of said error words and a predetermined test duration are stored in said line terminal (10₁), a profile being transmitted to said simulation facilities (33, 38) to generate the predetermined error words at predetermined times during a predetermined period in said profile.

7. Monitoring and management system in accordance with one of claims 3 to 5, characterised by the fact that at least one test profile characterised by predetermined error words, predetermined transmission times for said error words and a predetermined test duration are stored in said line terminal (10₁), said or each profile also being stored in each network terminal, a profile identifier being transmitted from the line terminal to said simulation facilities (33, 38) of a network terminal to generate predetermined error words at predetermined times throughout a period predetermined in said profile.

8. Monitoring and management system in accordance with claim 6 or 7, characterised by the fact that it contains facilities for comparing error messages (Md) and performance messages (Me) transmitted by the network terminal (30) with reference messages (Md' and Me') corresponding to said test profile run and facilities for deducing good or poor operation of said system from the result of said comparison.

9. Monitoring and management system in accordance with one of the preceding claims, characterised by the fact that said test request message (Mrq) is transmitted to a network terminal (30) over a downstream management and maintenance channel whilst said error messages (Md) and performance messages (Me) are transmitted over an upstream management and maintenance channel.

10. Monitoring and management system in accordance with one of the preceding claims, characterised by the fact that the simulation facilities (33; 38) generate simulated error words (ms) after receiving a synchronisation code transmitted by the line terminal (10₁).

## Patentansprüche

1. System zur Überwachung und Steuerung eines Punkt-zu-Mehrpunkt-Zugangsneztes, das dazu vorgesehen ist, einerseits ein Leitungsterminal (10₁) und andererseits eine Mehrzahl von Netzendpunkten (30) zu verbinden, wobei jeder Netzendpunkt (30) Mittel (31), um Übertragungsfehler zu erfassen, die bei der Übertragung zwischen dem Leitungsterminal (10₁) und dem Netzendpunkt (30) entstanden sind, und um für jeden erfaßten Fehler ein Wort (m) zu erzeugen, das für den erfaßten Fehler repräsentativ ist, Bearbeitungsmittel (33), die dazu vorgesehen sind, die von den Erfassungsmitteln (31) erzeugten Worte zu bearbeiten und Meldungen (Md, Me) zu bilden, die mit den Fehlerworten verbunden sind, und Mittel (35) umfaßt, um die Meldungen (Md, Me) an das Leitungsterminal (10₁) zu übertragen, dadurch gekennzeichnet, daß es an jedem Netzendpunkt (30) Simulationsmittel (33; 38), um simulierte Fehlerworte (ms) zu erzeugen, und Mittel (33; 32), um die von den Erfassungsmitteln (31) erfaßten Fehlerworte (m) durch die simulierten Fehlerworte (ms) zu ersetzen, die von den Simulationsmitteln erzeugt wurden, umfasst.

2. System zur Überwachung und Steuerung nach Anspruch 1, dadurch gekennzeichnet, daß die Meldungen einerseits Fehlermeldungen (Md), die die von den Erfassungsmitteln oder Simulationsmitteln erfaßten Fehler kennzeichnen, und andererseits Leistungsprotokollmeldungen (Me) sind.

3. System zur Überwachung und Steuerung nach Anspruch 1 oder 2, dadurch gekennzeichnet, daß diese Simulationsmittel (33; 38) die simulierten Fehlerworte (ms) auf Basis einer Testanforderungsmeldung (Mrq) erzeugen, die von dem Leitungsterminal (10₁) empfangen wurde.

4. System zur Überwachung und Steuerung nach einem der vorhergehenden Ansprüche, dadurch gekennzeichnet, daß die Bearbeitungsmittel (33) eine Bearbeitung der Leistungen auf Basis der simulierten Worte (ms) während einer in der Testanforderungsmeldung (Mrq) bestimmten Zeitdauer gewährleisten und die Leistungsprotokollmeldung (Me), die an das Leitungsterminal (10₁) übertragen wird, erzeugen.

5. System zur Überwachung und Steuerung nach einem der Ansprüche 1 bis 4, dadurch gekennzeichnet, daß die Bearbeitungsmittel (33) eine Bearbeitung der Leistungen auf Basis der simulierten Worte (ms) während einer vorbestimmten Zeitdauer gewährleisten und die Leistungsprotokollmeldung (Me), die an das Leitungsterminal (10₁) übertragen wird, erzeugen.

6. System zur Überwachung und Steuerung nach einem der Ansprüche 3 bis 5, dadurch gekennzeichnet, daß an dem Leitungsterminal (10₁) mindestens ein Testprofil gespeichert wird, welches durch vorbestimmte Fehlerworte, vorbestimmte Zeitpunkte für die Entsendung der Fehlerworte und eine vorbestimmte Testdauer gekennzeichnet ist, wobei ein Profil an die Simulationsmittel (33, 38) übertragen wird, um die vorbestimmten Fehlerworte zu vorbestimmten Zeitpunkten während einer vorbestimmten Zeitdauer in dem Profil zu erzeugen.

7. System zur Überwachung und Steuerung nach einem der Ansprüche 3 bis 5, dadurch gekennzeichnet, daß an dem Leitungsterminal (10₁) mindestens ein Testprofil gespeichert ist, welches durch vorbestimmte Fehlerworte, vorbestimmte Zeitpunkte für die Entsendung der Fehlerworte und eine vorbestimmte Testdauer gekennzeichnet ist, wobei dieses bzw. jedes Profil ebenfalls an jedem Netzendpunkt gespeichert ist, wobei ein Profilidentifikator von dem Leitungsterminal an die Simulationsmittel (33, 38) eines Netzendpunktes übertragen wird, um die vorbestimmten Fehlerworte zu vorbestimmten Zeitpunkten während einer vorbestimmten Zeitdauer in dem Profil zu erzeugen.

8. System zur Überwachung und Steuerung nach Anspruch 6 oder 7, dadurch gekennzeichnet, daß es Mittel umfaßt, um die Fehlermeldungen (Md) und die Leistungsmeldungen (Me), die von einem Netzendpunkt (30) ausgesandt werden, mit Referenzmeldungen (Md' und Me') zu vergleichen, die dem hergestellten Testprofil entsprechen, und Mittel, um von dem Resultat dieses Vergleichs den ordnungsgemäßen oder fehlerhaften Betrieb des Systems abzuleiten.

9. System zur Überwachung und Steuerung nach einem der vorhergehenden Ansprüche, dadurch gekennzeichnet, daß Testanforderungsmeldung (Mrq) an einen Netzendpunkt (30) über einen absteigenden Steuerungs- und Wartungsweg übertragen wird, wobei die Fehler- (Md) und Leistungsmeldungen (Me) über einen aufsteigenden Steuerungs- und Wartungsweg übertragen werden.

10. System zur Überwachung und Steuerung nach einem der vorhergehenden Ansprüche, dadurch gekennzeichnet, daß die Simulationsmittel (33; 38) simulierte Fehlerworte (ms) nach Empfang eines Synchronisationscodes, welcher von dem Leitungsterminal (10₁) entsandt wurde, erzeugen.
